# FASCICULE DE BREVET EUROPEEN

(11) **EP 3 137 242 B1**
(45) Date de publication et mention de la délivrance du brevet: **11.04.2018**
(21) Numéro de dépôt: 15723262.0
(22) Date de dépôt: 22.04.2015
(51) Int. Cl.: B21J 5/00, B22F 3/105, B22F 3/17

(54) **PROCÉDÉ DE FABRICATION DE PIÈCES MÉTALLIQUES OU EN COMPOSITE A MATRICE MÉTALLIQUE ISSUES DE FABRICATION ADDITIVE SUIVIE D'UNE OPÉRATION DE FORGEAGE DESDITES PIÈCES**
VERFAHREN ZUR HERSTELLUNG VON TEILEN AUS METALL ODER METALLMATRIXVERBUNDSTOFF UND ALS RESULTAT VON GENERATIVER FERTIGUNG, GEFOLGT VON EINER OPERATION EINSCHLIESSLICH DES SCHMIEDENS DER BESAGTEN TEILE
METHOD FOR THE PRODUCTION OF PARTS MADE FROM METAL OR METAL MATRIX COMPOSITE AND RESULTING FROM ADDITIVE MANUFACTURING FOLLOWED BY AN OPERATION INVOLVING THE FORGING OF SAID PARTS

(30) Priorité: 29.04.2014 FR 1453875
(43) Date de publication de la demande: 08.03.2017
(73) Titulaire: Saint Jean Industries, 69220 Saint Jean d'Ardières (FR)
(72) Inventeur: DI SERIO, Emile Thomas, F-69840 Chenas (FR); DUPERRAY, Lionel, F-69220 Saint Jean d'Ardières (FR); PERRIER, Frédéric, F-69003 Lyon (FR); DESRAYAUD, Christophe, F-69003 Lyon (FR)
(74) Mandataire: Cabinet Laurent & Charras
(86) Numéro de dépôt international: PCT/FR2015/051087
(87) Numéro de publication internationale: WO 2015/166167

(56) Documents cités:
- EP-A1- 2 112 242
- EP-A1- 2 113 583
- EP-A2- 2 910 324
- WO-A1-2007/073205
- WO-A1-2015/006447
- US-A- 3 826 301
- US-A- 4 069 042
- US-A- 6 060 016
- US-A1- 2013 039 799

## Description

L'invention se rattache au secteur technique de la fabrication de pièces métalliques ou en composite à matrice métallique pour la réalisation notamment et non limitativement de composants et équipements pour le secteur automobile et aéronautique.

La fabrication additive qui permet de fabriquer des pièces par fusion ou frittage de plusieurs couches successives se développe, le concept de base étant défini dans le brevet US 4 575 330 en date de 1984.

WO2015/006447, relevant de l'Article 54(3) CBE, ainsi que EP 2 112 242 A1 et EP 2 113 583 A1 décrivent des procédés de fabrication de pièces, selon les caractéristiques techniques du préambule de la revendication 1.

La fabrication additive est définie par l'ASTM comme étant un procédé de mise en forme d'une pièce par ajout de matière par empilement de couches successives, en opposition à la mise en forme par enlèvement de matière telle que l'usinage. C'est aussi le nom donné à la technologie d'impression tridimensionnelle.

Cette technologie s'est développée pour réaliser des pièces en alliage métallique aussi bien par fusion ou frittage de lits de poudre ou par soudure de fils. Des essais sur les matériaux composites à matrices métalliques se sont révélés très prometteurs. Les technologies utilisées pour les citer de manière non exhaustive vont du frittage sélectif par laser (Selecting Laser Sintering) à la fusion par faisceau d'électrons (Electron Beam Melting) en passant par le frittage métal au laser (Direct Metal Laser Sintering) ainsi que le dépôt de métal par laser (Laser Metal Deposition) ou la fusion par laser (Selective Laser Melting). Ces technologies permettent de fabriquer des pièces qui ont une grande complexité géométrique avec des propriétés mécaniques satisfaisantes au prix d'un temps de cycle qui s'avère souvent long. En effet, pour chaque couche successive un rouleau doit étaler la poudre et le faisceau d'électrons ou laser doit balayer l'intégralité de la surface de chaque couche pour obtenir une bonne cohésion de la poudre. Pour réduire ce temps de cycle, la stratégie des fabricants est d'augmenter la puissance et le nombre de faisceaux pour pouvoir faire fondre ou fritter chaque couche plus rapidement, entraînant ainsi une hausse du prix de la machine de fabrication. Les métaux utilisés sont principalement les alliages de titane pour la technologie Electron Beam Melting mais les technologies utilisant le laser sont plus polyvalentes. Elles permettent de fabriquer des pièces en alliages ferreux, en alliages à base titane, aluminium, cobalt-chrome, nickel...ainsi qu'en matériaux composites à matrice métallique (titane-carbure de titane, aluminium-alumine, aluminium-carbure de silicium...)

Les pièces issues de fabrication additive comportent cependant assez souvent une microporosité résiduelle. Celle-ci détériore les propriétés mécaniques des pièces notamment la ductilité et la tenue en fatigue. Une étape de HIP (Hot Isostatic Pressing), qui consiste en une mise sous haute pression à haute température de la pièce, est souvent nécessaire pour obtenir une tenue en fatigue satisfaisante.

Les pièces issues de fabrication additive comportent aussi une rugosité de surface grossière du fait de la granulométrie de la poudre utilisée ainsi que de la trace résiduelle des différentes strates lors de la fabrication additive.

Avec la plupart des techniques de fabrication additive, les pièces comportent aussi une microstructure de fonderie du fait de la fusion de la poudre au cours de son obtention ou lors de la réalisation de la pièce. Cette structure est notamment lamellaire pour les alliages à base titane et ne permet pas de satisfaire à la majeure partie des cahiers des charges pour les pièces de structure aéronautique. En effet, pour de meilleures propriétés mécaniques une microstructure bimodale, à la fois lamellaire et nodulaire est demandée. Cette structure peut être obtenue pour alors uniquement par des opérations de déformation à chaud de type forge, et dans des conditions spécifiques de mise en oeuvre coûteuse.

Au vu de ces inconvénients, la démarche du Demandeur a donc été de réfléchir et de trouver une solution permettant de palier à ces différents problèmes.

D'une manière tout à fait indépendante et sans aucun lien avec la fabrication additive, le Demandeur a développé depuis 1983, c'est-à-dire à une période correspondant à celle du brevet US précité un concept nouveau alliant les technologies de la fonderie et du forgeage d'une pièce en aluminium ou alliage d'aluminium. Cette technologie a été développée dans le brevet européen 119365 mettant en oeuvre une première phase de coulage d'une pièce en aluminium ou alliage d'aluminium dans un moule pour constituer une préforme, celle-ci ensuite étant soumise à une opération de forgeage dans une matrice de dimensions plus réduites et permettant l'obtention de la forme finale à obtenir avec des propriétés très spécifiques rappelées dans ledit brevet. Cette technologie dite du « coulé-forgé » est commercialisée sous la marque « COBAPRESS » qui fait maintenant l'objet d'une très large exploitation au plan mondial.

Force est de constater que depuis cette période 1983-1984, c'est-à-dire depuis 30 ans, les solutions apportées pour remédier aux inconvénients de la fabrication additive ci-avant rappelée sont longues et coûteuses et aucune solution n'a été trouvée pour l'obtention d'une microstructure bimodale nécessaire en grande majorité aux pièces de structure aéronautique en alliage de titane.

Le Demandeur, face aux problèmes à résoudre pour la fabrication additive, a constaté que le problème des microporosités rencontré dans cette dite fabrication est également présent lors de la fabrication de pièces de fonderie.

La démarche du Demandeur s'est donc orientée vers la recherche d'une combinaison inattendue des deux technologies de fabrication additive et de coulé-forgé apparemment incompatible alors ces deux technologies sont connues depuis la période 1983-1984.

De manière tout à fait inattendue, et à partir d'essais effectués par le Demandeur, il apparaît que la mise en oeuvre en combinaison des deux technologies est susceptible de répondre et remédier aux inconvénients constatés dans la fabrication additive.

Selon l'invention, la solution développée consiste à obtenir une pièce en alliage métallique ou en matériaux composites à matrice métallique par fabrication additive pour constituer une préforme, puis à forger cette préforme à chaud, à mi-chaud ou à froid en une étape entre deux matrices en vue de l'obtention de la forme finale de la pièce à obtenir, le procédé de fabrication étant caractérisé en ce que la préforme contient des zones où la poudre est non soudée ou partiellement consolidée.

On obtient ainsi la pièce à sa forme finale, qui après ébavurage ou sans ébavurage, présente les dimensions fonctionnelles pour répondre au besoin sans nécessiter d'usinages supplémentaires autres que les zones fonctionnelles avec des intervalles de tolérance restreints.

De manière tout à fait inattendue, ce procédé permet d'obvier aux inconvénients précités et aux limites observées de pièces obtenues par fabrication additive.

L'étape de forge qui consiste en une déformation de la matière permet de refermer et ressouder les microporosités avec une liaison homogène des différentes couches de la structure additive. On obtient ainsi un gain de ductilité et de tenue en fatigue.

Cette étape de forge entre deux matrices polies permet aussi de diminuer drastiquement la rugosité de surface, ce qui permet d'améliorer la tenue en fatigue ainsi que l'aspect de surface.

Les essais effectués apparaissent très prometteurs. Aucune indication de chacune des technologies connues depuis 1983-1984 ne pouvaient suggérer leur combinaison car l'état d'obtention de la préforme était différent, l'une par fonderie dans la technologie du « coulé-forgé », et l'autre par fusion ou frittage des strates successives lors de la fabrication additive.

Dans le cadre de la mise en oeuvre de l'invention, la pièce peut être en alliage métallique (acier, fer, aluminium, inconel, nickel, titane, chrome-cobalt...) ou en matériaux composites à matrice métallique (titane-carbure de titane, aluminium-alumine, aluminium-carbure de silicium...).

La seconde étape du procédé selon l'invention de forgeage de la préforme obtenue à partir d'une fabrication additive peut être effectuée à chaud, à mi-chaud, ou à froid. Les matrices peuvent être, le cas échéant, polies.

Selon l'invention, cette technologie de matriçage d'une préforme issue de fabrication additive est appliquée à des préformes qui comportent des zones de poudre non soudées ou partiellement consolidées, qui sont déformées et soudées lors de l'étape de forge.

La forge de préformes de poudre fabriquées par compaction uni-axiale ou isostatique est déjà un procédé existant. La technique utilisée dans l'invention est novatrice au sens où la poudre est emprisonnée au sein de la préforme qui a le pourtour soudé. Le fait de ne pas souder l'intégralité de la poudre permet d'avoir un gain important en temps de cycle lors de la fabrication. En effet, pour fritter ou faire fondre la poudre lors de la fabrication additive, le laser ou le faisceau d'électrons doit balayer l'intégralité de la surface de la pièce pour chaque couche. En réalisant de manière optimisée la fusion de poudre uniquement sur le contour extérieur de la préforme, celle-ci étant donc constituée d'une coque soudée solide emprisonnant la poudre partiellement consolidée ou non consolidée à l'intérieur, on obtient une préforme sous forme de coque solide remplie de poudre non soudée. La forge de cette préforme permet d'obtenir la pièce finale. La soudure de la poudre lors de la déformation à chaud est d'autant plus efficace sur les préformes fabriquées en EBM (Electron Beam Melting) du fait d'une fabrication sous vide qui permet de ne pas emprisonner de gaz au sein du matériau.

Cette technique a aussi pour avantage d'obtenir une microstructure à grains fins du fait qu'il n'y a pas de fusion de la poudre. En effet, une croissance des grains par épitaxie sur la couche inférieure a été observée lors de la fabrication additive d'alliage de titane. Cette croissance entraîne une microstructure avec des grains assez grossiers qui n'est pas bonne pour les propriétés mécaniques. Sans fusion de la poudre, nous avons une conservation de la finesse de la microstructure. Les zones non soudées de la préforme donnent donc des zones avec une microstructure très fine sur la pièce finale vu que la soudure s'effectue en phase solide lors de l'étape de forge. Cette structure fine qui ne comporte pas de texture cristallographique est très bonne pour les propriétés mécaniques statiques et cycliques de la pièce.

Les avantages et les résultats inattendus dans la mise en oeuvre de l'invention ainsi mis en valeur constituent un développement considérable dans le traitement des pièces métalliques ou en composite à matrice métallique, issues de la fabrication additive.

## Revendications

1. Procédé de fabrication d'une pièce en alliage métallique ou en matériaux composites à matrice métallique, selon lequel :
- on réalise une préforme par fabrication additive par ajout de matière par empilement de couches successives,
- on soumet la préforme à une opération de forgeage en une seule étape entre deux matrices en vue de l'obtention de la forme finale de la pièce à obtenir,
***caractérisé* en ce que** la préforme contient des zones où la poudre est non soudée ou partiellement consolidée.

2. Procédé selon la revendication 1, ***caractérisé* en ce que** la pièce en alliage métallique est en alliage à base de fer, d'aluminium, de nickel, de titane, de chrome ou de cobalt.

3. Procédé selon la revendication 1, ***caractérisé* en ce que** la pièce en matériaux composites est en alliage de titane-carbure de titane, alliage d'aluminium-alumine, alliage d'aluminium-carbure de silicium.

4. Procédé selon l'une quelconque des revendications 1, 2 et 3, ***caractérisé* en ce que** l'opération de forgeage de la préforme obtenue par fabrication additive est obtenue à mi-chaud ou à froid ou à chaud.

## Patentansprüche

1. Verfahren zur Herstellung eines Teils aus Metalllegierung oder Metallmatrix-Verbundwerkstoffen, gemäß dem:
- eine Vorform durch additive Fertigung unter Materialzugabe durch Stapeln aufeinanderfolgender Schichten hergestellt wird,
- die Vorform in einem einzigen Schritt einem Schmiedevorgang zwischen zwei Gesenken zwecks Erlangung der endgültigen Form des zu erhaltenden Teils unterzogen wird,
**dadurch gekennzeichnet, dass** die Vorform Zonen enthält, in denen das Pulver unverschweißt oder teilweise verfestigt ist.

2. Verfahren gemäß Anspruch 1, **dadurch gekennzeichnet, dass** das Teil aus Metalllegierung aus einer Legierung auf Basis von Eisen, Aluminium, Nickel, Titan, Chrom oder Cobalt besteht.

3. Verfahren gemäß Anspruch 1, **dadurch gekennzeichnet, dass** das Teil aus Verbundwerkstoffen aus einer Titan-Titancarbid-Legierung, einer Aluminium-Aluminiumoxid-Legierung, einer Aluminium-Siliciumcarbid-Legierung besteht.

4. Verfahren gemäß einem der Ansprüche 1, 2 und 3, **dadurch gekennzeichnet, dass** der Schmiedevorgang der durch additive Fertigung erlangten Vorform bei mittlerer Hitze oder bei Kälte oder bei Hitze erzielt wird.

## Claims

1. A method of manufacturing a piece of metal alloy or of metal matrix composite materials, which method consists in:
- making a preform by additive manufacturing by adding material in successive layers;
- subjecting the preform to a forging operation taking place in a single step and between two dies with a view to obtaining the final shape of the piece to be obtained,
***characterized* in that** the preform contains the zones in which the powder is not bonded or is partially consolidated.

2. A method according to claim 1, ***characterized* in that** the piece of metal alloy is of an alloy based on iron, aluminum, nickel, titanium, chromium, or cobalt.

3. A method according to claim 1, ***characterized* in that** the piece of composite materials is of a titanium-titanium carbide alloy, of an aluminum-alumina alloy, or of an aluminum-carbide silicon alloy.

4. A method according to any one of claims 1, 2, and 3, ***characterized* in that** the forging operation for forging the preform obtained by additive manufacturing is performed semi-hot or cold or hot.
